# EUROPÄISCHE PATENTSCHRIFT

(11) **EP 3 723 956 B1**
(45) Veröffentlichungstag und Bekanntmachung des Hinweises auf die Patenterteilung: **01.03.2023**
(21) Anmeldenummer: 18819089.6
(22) Anmeldetag: 12.12.2018
(51) Int. Cl.: B29B 15/12, B29C 33/38

(54) **VORRICHTUNG UND VERFAHREN ZUR IMPRÄGNIERUNG VON EINZELFASERN, EINZELFÄDEN ODER EINZELROVINGS**
DEVICE AND METHOD FOR IMPREGNATING INDIVIDUAL FIBRES, INDIVIDUAL THREADS OR INDIVIDUAL ROVINGS
DISPOSITIF ET PROCÉDÉ D'IMPRÉGNATION DE FIBRES INDIVIDUELLES, DE MONOFILAMENTS OU DE STRATIFILS

(30) Priorität: 14.12.2017 EP 17207290
(43) Veröffentlichungstag der Anmeldung: 21.10.2020
(73) Patentinhaber: BASF SE, 67056 Ludwigshafen am Rhein (DE)
(72) Erfinder: MEYER, Andre, 49448 Lemfoerde (DE); EMGE, Andreas, 49448 Lemfoerde (DE); FEDDRICH, Laura, 49448 Lemfoerde (DE)
(74) Vertreter: BASF IP Association
(86) Internationale Anmeldenummer: PCT/EP2018/084491
(87) Internationale Veröffentlichungsnummer: WO 2019/115587

(56) Entgegenhaltungen:
- EP-A1- 0 033 298
- EP-A2- 0 479 564
- DE-A1- 19 757 881

## Beschreibung

Die Erfindung betrifft eine Vorrichtung zur Imprägnierung von Einzelfasern, Einzelfäden oder Einzelrovings mit einem Matrixmaterial. Die Erfindung betrifft weiterhin ein Verfahren zur Herstellung von Bauteilen aus imprägnierten Einzelfasern, Einzelfäden oder Einzelrovings, wobei die Einzelfasern, Einzelfäden oder Einzelrovings in der Vorrichtung imprägniert werden.

Bauteile, die aus imprägnierten Einzelfasern, Einzelfäden oder Einzelrovings hergestellt werden, sind zum Beispiel gewickelte Hohlkörper aus Faserverbundkunststoffen. Solche gewickelten Hohlkörper sind zum Beispiel Masten für Windkraftanlagen oder auch für Segelschiffe.

Bei der Herstellung solcher Bauteile ist es möglich, jeweils nur eine Einzelfaser, einen Einzelfaden oder ein Einzelroving zu nutzen oder alternativ mehrere Einzelfasern, Einzelfäden oder Einzelrovings parallel in separaten Vorrichtungen zu imprägnieren und anschließend zum Bauteil zu formen. Eine Imprägnierung von Einzelfasern, Einzelfäden oder Einzelrovings ist insbesondere dann von Vorteil, wenn viele einzelne Fasern aus verschiedenen Richtungen kommend auf einer Matrize oder in einem Werkzeug abgelegt werden. Dies betrifft insbesondere kontinuierliche Wickelverfahren und Webverfahren. Im allgemeinen werden hierbei die Einzelfasern, die Einzelfäden oder die Einzelrovings direkt nach dem Tränken in eine Matrize für das Bauteil eingelegt oder auf einen Wickeldorn aufgewickelt, um das Bauteil herzustellen.

Eine Vorrichtung zur Imprägnierung eines Einzelfadens ist aus FR-A 2 703 036 bekannt. Hier wird das Matrixmaterial über eine Dosiereinrichtung direkt auf den Einzelfaden geträufelt.

Eine weitere Vorrichtung zur Imprägnierung eines Fadens ist in EP-A 0 358 905 beschrieben. Hier wird der Faden durch einen porösen Körper geführt, dem auf den Faden aufzubringende Medium über eine Druckleitung zugeführt wird. Die zugeführte Menge entspricht dabei der Menge an Medium, die auf den Faden aufgebracht wird.

Eine Vorrichtung, mit der eine Mischung auf Kunststofffasern aufgebracht wird, ist in US-B 6,884,469 beschrieben. Hier werden die Fasern mit Hilfe einer Walze, über die die Fasern geführt werden und auf die die Mischung aufgetragen wird, imprägniert. Eine ähnliche Vorrichtung zur Beschichtung von Fasern mittels einer Walze, auf der das Matrixmaterial aufgebracht ist, ist auch in US 5,049,407 oder US 5,352,392 beschrieben.

Weitere Vorrichtungen zur Imprägnierung eines Fadens sind auch aus US 5,330,338, US 5,499,911, US 4,088,468, US 3,924,028 oder WO-A 81/02008 bekannt. Des Weiteren beschreibt DE-A 41 34 070 eine Vorrichtung mit der ein Draht gleitfähig gemacht wird, indem ein Schmiermittel über eine um den Draht gewickelte Faser zugeführt wird.

Weiterhin offenbart DE-A 197 57 881 eine Vorrichtung zur Imprägnierung von Fasermaterial, bei dem das Fasermaterial über einen Zufuhrkörper bewegt wird und das Imprägniermittel durch Öffnungen im Zufuhrkörper zugeführt wird.

Es hat sich jedoch gezeigt, dass die aus dem Stand der Technik bekannten Verfahren nicht ermöglichen, Einzelfasern, Einzelfäden oder Einzelrovings tropffrei zu imprägnieren, insbesondere, wenn die Imprägniereinheit drucklos und in alle Raumrichtungen arbeiten soll.

Aufgabe der vorliegenden Erfindung ist es daher, eine Vorrichtung zur Imprägnierung von Einzelfasern, Einzelfäden oder Einzelrovings bereitzustellen, die die einzelnen Fasern unabhängig von der Raumrichtung im Wesentlichen drucklos mit einer geeigneten Menge an Matrixmaterial benetzt und dabei tropffrei arbeitet.

Eine weitere Aufgabe der Erfindung war es, ein Verfahren zur Herstellung eines Bauteils aus imprägnierten Einzelfasern, Einzelfäden oder Einzelrovings bereitzustellen.

Die Aufgabe wird gelöst durch eine Vorrichtung zur Imprägnierung von Einzelfasern, Einzelfäden oder Einzelrovings mit einem Matrixmaterial, umfassend ein mit dem Matrixmaterial getränktes poröses Material sowie eine Dosiereinrichtung, um Matrixmaterial in das poröse Material einzudosieren, wobei eine Einrichtung umfasst ist, mit der die zu imprägnierende Einzelfaser, der zu imprägnierende Einzelfaden oder das zu imprägnierende Einzelroving gegen eine Stirnfläche des porösen Materials gedrückt werden kann, oder dass das poröse Material in einer Hülse aufgenommen ist und die Einzelfaser, der Einzelfaden oder das Einzelroving durch das poröse Material in der Hülse geführt werden kann, wobei das poröse Material ein offenzelliger Schaum mit einer Zellgröße mit einem mittleren Durchmesser im Bereich von 70 bis 250 µm ist und wobei die Vorrichtung so eingerichtet ist, dass das Poröse Material nicht mit dem Matrixmaterial übersättigt wird.

Als Einzelfaden wird im Rahmen der vorliegenden Erfindung jedes Gebilde verstanden, das eine Länge aufweist, die ein Vielfaches des Durchmessers beträgt. Üblicherweise ist ein Faden aus mehreren Fasern aufgebaut, die verzwirnt oder versponnen sind. Bei einem Einzelroving ist eine Vielzahl an Fasern, Fäden oder Filamenten parallel zueinander angeordnet.

Durch die Verwendung eines offenzelligen Schaums mit einer Zellgröße mit einem mittleren Durchmesser im Bereich von 70 bis 250 µm als poröses Material ist es möglich, das Matrixmaterial so zu dosieren, dass dieses nur aus dem porösen Material abgegeben wird, solange eine zu imprägnierende Einzelfaser, ein zu imprägnierender Einzelfaden oder ein zu imprägnierendes Einzelroving mit dem porösen Material in Kontakt ist und sobald kein Kontakt einer zu imprägnierenden Einzelfaser, eines zu imprägnierenden Einzelfadens oder eines zu imprägnierenden Einzelrovings mit dem porösen Material existiert, die Abgabe von Matrixmaterial aus dem porösen Material beendet wird. Dies lässt sich zum Beispiel durch Verwendung eines komprimierbaren porösen Materials erreichen, das sich bei Druck komprimieren lässt und sobald der Druck auf das poröse Material unterbrochen wird, wieder in seine Ausgangsform zurückstellt. In diesem Fall wird das poröse Material zum Imprägnieren der Einzelfaser, des Einzelfadens oder des Einzelrovings in dem Bereich, in dem die Einzelfaser, der Einzelfaden oder das Einzelroving dagegen gedrückt wird, komprimiert. Durch die Kompression des porösen Materials wird Matrixmaterial freigesetzt, mit dem die Einzelfaser, der Einzelfaden oder das Einzelroving imprägniert werden können. Damit Matrixmaterial aus dem porösen Material austreten kann, ist es bevorzugt, wenn das poröse Material zumindest im Bereich der Stirnfläche, gegen die die Einzelfaser, der Einzelfaden oder das Einzelroving gedrückt wird, mit dem Matrixmaterial gesättigt ist. Beim Drücken der Einzelfaser, des Einzelfadens oder des Einzelrovings gegen das poröse Material und die damit verbundene Kompression nimmt das Volumen ab und das Matrixmaterial tritt aus dem porösen Material aus. Sobald kein Druck gegen das poröse Material mehr erfolgt, stellt sich das poröse Material wieder in die Ausgangsform zurück und es tritt kein weiteres Matrixmaterial mehr aus.

Alternativ kann auch durch die Berührung der zu imprägnierenden Einzelfaser, des zu imprägnierenden Einzelfadens oder des zu imprägnierenden Einzelrovings aufgrund von Kapillarkräften Matrixmaterial aus dem porösem Material an die zu imprägnierende Einzelfaser, den zu imprägnierenden Einzelfaden oder das zu imprägnierende Einzelroving übertragen werden und durch die Abgabe von Matrixmaterial fließt aufgrund der Kapillarkräfte innerhalb des porösen Materials wieder Matrixmaterial nach. Auch in diesem Fall wird nur dann Matrixmaterial vom porösen Material abgegeben, wenn dieses mit einer zu imprägnierenden Einzelfaser, einem zu imprägnierenden Einzelfaden oder einem zu imprägnierenden Einzelroving in Kontakt ist.

In der Ausführungsform, in der die zu imprägnierende Einzelfaser, der zu imprägnierende Einzelfaden oder das zu imprägnierende Einzelroving gegen eine Stirnfläche des porösen Materials gedrückt werden, weist das poröse Material vorzugsweise eine Länge auf, die sehr viel größer ist als die maximale Länge oder Breite der Querschnittsfläche. Die Stirnfläche, gegen die die zu imprägnierende Einzelfaser, der zu imprägnierende Einzelfaden oder das zu imprägnierende Einzelroving gedrückt werden, ist dabei die Querschnittsfläche an einem Ende des porösen Materials. Um einen Transport des Matrixmaterials an die Stirnfläche, die mit der zu imprägnierenden Einzelfaser, dem zu imprägnierenden Einzelfaden oder dem zu imprägnierenden Einzelroving in Kontakt ist, zu ermöglichen, ist es weiterhin bevorzugt, wenn das poröse Material einen Flüssigkeitstransport entlang der Länge durch Kapillarkräfte erlaubt. Die Querschnittsfläche des porösen Materials kann dabei jede beliebige Form einnehmen. Bevorzugt ist es, wenn die Querschnittsfläche kreisförmig, rechteckig oder quadratisch ist.

In der Ausführungsform, bei der die zu imprägnierende Einzelfaser, der zu imprägnierende Einzelfaden oder das zu imprägnierende Einzelroving gegen das poröse Material gedrückt wird, ist es notwendig, eine Einrichtung vorzusehen, mit der die zu imprägnierende Einzelfaser, der zu imprägnierende Einzelfaden oder das zu imprägnierende Einzelroving gegen das poröse Material gedrückt wird. Eine geeignete Einrichtung, mit der die zu imprägnierende Einzelfaser, der zu imprägnierende Einzelfaden oder das zu imprägnierende Einzelroving gegen das poröse Material gedrückt werden kann, umfasst zum Beispiel mindestens zwei Spannrollen, über die die Einzelfaser, der Einzelfaden oder das Einzelroving geführt wird.

Alternativ oder zusätzlich zu den Spannrollen ist es auch möglich, eine Einrichtung, mit der die zu imprägnierende Einzelfaser, der zu imprägnierende Einzelfaden oder das zu imprägnierende Einzelroving gegen das poröse Material gedrückt werden kann, vorzusehen, die eine Auflage umfasst, auf der die Einzelfaser, der Einzelfaden oder das Einzelroving geführt werden.

Bevorzugt wird ein festes Material für die Auflage vorgesehen, so dass es möglich ist, das poröse Material zu komprimieren während die Einzelfaser, der Einzelfaden oder das Einzelroving dagegen gedrückt werden. Geeignete Materialien für die Auflage können zum Beispiel Kunststoffe, Metalle, Glas oder Keramik sein. Das eingesetzte Material muss nur inert gegenüber dem Material der Einzelfaser, des Einzelfadens oder des Einzelrovings sowie dem eingesetzten Matrixmaterial sein. Weiterhin sollte das Material für die Auflage abriebfest sein, damit kein Abrieb des Materials der Auflage die Einzelfaser, der Einzelfaden oder das Einzelroving verunreinigt. Bevorzugt ist es, wenn das Material für die Auflage ein Metall oder Glas ist. Als Metalle eigenen sich zum Beispiel Edelstahl oder Aluminium. Auch abriebfeste Keramiken oder Kunststoffe können für die Auflage eingesetzt werden. Bevorzugt ist es jedoch, eine Auflage aus einem Metall oder aus Glas zu verwenden. Als "abriebfest" werden dabei im Rahmen der vorliegenden Erfindung Materialien verstanden, bei denen beim Durchlauf von 1000 km der Einzelfaser, des Einzelfadens oder des Einzelrovings weniger als 0,1 mm durch die durchlaufenden Fasern abgetragen werden.

Um eine ausreichende Imprägnierung der Einzelfaser, des Einzelfadens oder des Einzelrovings zu erhalten ist es bevorzugt, wenn die Stirnfläche des porösen Materials, gegen die die zu imprägnierende Einzelfaser, der zu imprägnierende Einzelfaden oder das zu imprägnierende Einzelroving gedrückt wird, eine maximale Breite und eine maximale Länge aufweist, die mindestens dem Durchmesser der zu tränkenden Einzelfaser, des zu tränkenden Einzelfadens oder des zu tränkenden Einzelrovings entspricht. Bevorzugt bei nicht kreisförmiger Stirnfläche ist es, wenn die maximale Breite der Stirnfläche im Bereich des 1,5- bis 5-fachen des Durchmessers der zu tränkenden Einzelfaser, des zu tränkenden Einzelfadens oder des zu tränkenden Einzelrovings liegt und die maximale Länge der Stirnfläche im Bereich des 2- bis 10-fachen des Durchmessers der zu tränkenden Einzelfaser, des zu tränkenden Einzelfadens oder des zu tränkenden Einzelrovings. In diesem Zusammenhang wird als "Breite" die Ausdehnung der Stirnfläche des porösen Materials quer zur Laufrichtung der zu tränkenden Einzelfaser, des zu tränkenden Einzelfadens oder des zu tränkenden Einzelrovings verstanden und als "Länge" die Ausdehnung parallel zur Laufrichtung der zu tränkenden Einzelfaser, des zu tränkenden Einzelfadens oder des zu tränkenden Einzelrovings. Bei einer kreisförmigen Stirnfläche liegt der Durchmesser der Stirnfläche vorzugsweise im Bereich des 1,5- bis 10-fachen des Durchmessers der zu tränkenden Einzelfaser, des zu tränkenden Einzelfadens oder des zu tränkenden Einzelrovings.

Wenn die Einzelfaser, der Einzelfaden oder das Einzelroving mit einer Auflage gegen das poröse Material gedrückt wird, ist die Fläche der Auflage vorzugsweise mindestens genauso groß wie die Stirnfläche des porösen Materials, so dass bei Kontakt der Auflage an der Stirnfläche des porösen Materials die gesamte Stirnfläche des porösen Materials auf der Auflage aufliegt.

Neben einer festen Auflage, auf der die Einzelfaser, der Einzelfaden oder das Einzelroving geführt werden und mit der die Einzelfaser, der Einzelfaden oder das Einzelroving gegen das poröse Material gedrückt wird, ist es auch möglich, dass die Auflage, auf der die Einzelfaser, der Einzelfaden oder das Einzelroving geführt werden, eine Stirnfläche eines zweiten porösen Materials ist. In einer Ausführungsform ist das zweite poröse Material ebenfalls mit Matrixmaterial getränkt. In diesem Fall ist es möglich, für das zweite poröse Material ein vom ersten porösen Material verschiedenes Material einzusetzen, bevorzugt ist jedoch der Einsatz des gleichen Materials für das erste und das zweite poröse Material. Auch ist es möglich, über das erste und das zweite poröse Material unterschiedliche Komponenten zuzuführen, beispielsweise eine erste Komponente eines Zweikomponentensystems über das erste poröse Material und eine zweite Komponente des Zweikomponentensystems über das zweite poröse Material. Die Vermischung erfolgt dann unmittelbar an der zu imprägnierenden Einzelfaser, dem zu imprägnierenden Einzelfaden oder dem zu imprägnierenden Einzelroving während des Durchlaufs.

Bevorzugt ist es jedoch, über das erste poröse Material und das zweite poröse Material das gleiche Matrixmaterial zuzuführen.

Eine weitere Möglichkeit des Einsatzes eines zweiten porösen Materials besteht darin, das zweite poröse Material zu nutzen, um überschüssiges Matrixmaterial, das durch den Druck des ersten porösen Material gegen das zweite poröse Material freigesetzt wird, aufzunehmen und abzuführen. Hierdurch kann das überschüssige aus dem ersten porösen Material ausgetretene Matrixmaterial gezielt entfernt werden. Das vom zweiten porösen Material aufgenommene Matrixmaterial kann dann zum Beispiel gezielt durch Auspressen aus dem zweiten porösen Material entfernt werden.

Wenn das poröse Material in einer Hülse aufgenommen ist und die zu imprägnierende Einzelfaser, der zu imprägnierende Einzelfaden oder das zu imprägnierende Einzelroving durch die Hülse geführt wird, wird vorzugsweise so viel Matrixmaterial in das poröse Material dosiert, dass dieses übersättigt ist und das Matrixmaterial auch ohne Druckeinwirkung an die zu imprägnierende Einzelfaser, den zu imprägnierenden Einzelfaden oder das zu imprägnierende Einzelroving abgibt.

Um das Einlegen der Einzelfaser, des Einzelfadens oder des Einzelrovings in die Hülse zu erleichtern, ist es vorteilhaft, wenn die Hülse, in der das poröse Material aufgenommen ist, zweiteilig ausgeführt ist und zum Einlegen der Einzelfaser, des Einzelfadens oder des Einzelrovings geöffnet werden kann, wobei jeder Teil der Hülse poröses Material enthält. Hierbei können die zwei Teile der Hülse entweder vollständig voneinander getrennt und nach dem Einlegen der Einzelfaser, des Einzelfadens oder des Einzelrovings mit geeigneten Befestigungsmitteln miteinander verbunden werden oder alternativ ist ein Scharnier vorgesehen, mit dem die zwei Teile verbunden sind, so dass die zwei Teile der Hülse zum Einlegen der Einzelfaser, des Einzelfadens oder des Einzelrovings aufgeklappt werden können. Nach dem Einlegen der Einzelfaser, des Einzelfadens oder des Einzelrovings werden die zwei Teile zugeklappt und verschlossen.

Sowohl bei zwei getrennten Teilen für die Hülse als auch bei der Ausführungsform mit Scharnier können alle dem Fachmann bekannten Verschlüsse zum Verbinden der Teile genutzt werden. Geeignete Verschlüsse oder Befestigungsmittel sind zum Beispiel Schnappverschlüsse, Bügel, Haken oder auch Schrauben. Wichtig ist, dass die Verbindung zum Verschließen der zwei Teile lösbar ist, um zum Beispiel im Falle eines Fadenrisses oder nach dem Durchlaufen eines Faserendes eine neue Einzelfaser, einen neuen Einzelfaden oder ein neues Einzelroving einlegen zu können.

Als poröses Material, das mit dem Matrixmaterial getränkt wird, eignet sich jedes Material, mit dem eine Übertragung des Matrixmaterials auf die Einzelfaser, der Einzelfaden oder das Einzelroving ermöglicht wird und zu einem offenzelligen Schaum mit einer Zellgröße mit einem mittleren Durchmesser im Bereich von 70 bis 250 µm geformt werden kann. Um eine Reaktion mit dem Matrixmaterial zu verhindern ist es weiterhin vorteilhaft, wenn das poröse Material gegenüber dem Matrixmaterial inert ist. Besonders bevorzugt ist das poröse Material ein Schaum, der im Wesentlichen nur aus Zellstegen besteht. "Im Wesentlichen nur aus Zellstegen besteht" bedeutet im Rahmen der vorliegenden Erfindung, dass mehr als 90% des Schaums, bevorzugt mehr als 95% des Schaums und insbesondere mehr als 98% des Schaums ausschließlich Zellstege und keine Zellwände aufweist.

Geeignete Werkstoffe, aus denen das poröse Material hergestellt werden kann, sind alle Werkstoffe, die nicht mit dem Matrixmaterial reagieren. Dies können zum Beispiel Kunststoffe, Metalle, Glas oder Keramik sein. Geeignete Kunststoffe sind insbesondere ausgewählt aus Polyolefinen, insbesondere Polyethylen oder Polypropylen, Polyurethane oder Melaminharze und geeignete Metalle sind beispielsweise Sintermetalle. Besonders bevorzugt als poröses Material sind offenzellige Polymerschäme aus Polyurethan oder Melaminharzen.

Insbesondere dann, wenn das Matrixmaterial aufgrund des Drucks durch die Einzelfaser, der Einzelfaden oder das Einzelroving aus dem porösen Material austreten soll und nach Beendigung des Drucks auch kein Matrixmaterial mehr freigegeben werden soll, ist es vorteilhaft, wenn ein elastischer offenzelliger Polymerschaum eingesetzt wird, der sich nach Beendigung des Drucks wieder in die ursprüngliche Form zurückstellt.

Um kontinuierlich auch sehr lange Einzelfasern, Einzelfäden oder Einzelrovings imprägnieren zu können, ist es notwendig, ausreichen Matrixmaterial bereitzustellen. Damit dieses jedoch nur dann aus dem porösen Material austritt, wenn dieses mit der zu imprägnierenden Einzelfaser, dem zu imprägnierenden Einzelfaden oder dem zu imprägnierenden Einzelroving in Kontakt ist, darf das poröse Material nicht mit dem Matrixmaterial übersättigt sein. Sättigung ist dann erreicht, wenn das poröse Material kein weiteres Matrixmaterial mehr aufnehmen kann ohne über die Oberfläche an einer beliebigen Stelle Matrixmaterial abzugeben. Dies macht es erforderlich, dass während des Imprägnierens einer Einzelfaser, eines Einzelfadens oder eines Einzelrovings Matrixmaterial in das poröse Material nachdosiert werden kann. Hierzu wird das poröse Material vorzugsweise mit einem Vorratsbehälter, in dem sich das Matrixmaterial befindet, verbunden. Das Matrixmaterial kann dann mit einer geeigneten Dosiereinrichtung, beispielsweise einer Dosierpumpe dem porösen Material zugeführt werden. Alternativ ist es auch möglich, das Matrixmaterial einfach nachfließen zu lassen, zum Beispiel unter dem Einfluss der Schwerkraft. Hierzu kann zum Beispiel ein Pufferbehälter oberhalb des porösen Materials eingesetzt werden, der mit dem Matrixmaterial bis zu einem vorgegebenen Füllstand gefüllt ist. Hierdurch lässt sich der hydrostatische Druck, mit dem das Matrixmaterial in das poröse Material transportiert wird, weitgehend konstant halten. Weiterhin ist es auch möglich, die Verbindung vom Vorratsbehälter, in dem sich das Matrixmaterial befindet, zum porösen Material mit einem weiteren porösen Material zu füllen, so dass das Matrixmaterial durch Kapillarkräfte durch die Verbindungsleitung in das poröse Material geleitet wird.

Bei Verwendung der Hülse, in der das poröse Material aufgenommen ist, wird das Matrixmaterial vorzugsweise entweder mit Hilfe einer Dosiereinrichtung oder auch unter dem Einfluss der Schwerkraft aus dem Vorratsbehälter in das poröse Material in der Hülse zugeführt.

Um einen definierten Faservolumengehalt einzustellen, ist es weiterhin möglich, zusätzlich eine Düse oder Lochblende vorzusehen, deren Durchmesser so gewählt wird, dass überschüssiges Matrixmaterial an der Düse oder dem Lochblech abgestreift wird. Hierdurch wird ein im Wesentlichen konstanter Faservolumengehalt des Einzelfadens, der Einzelfaser oder des Einzelrovings eingestellt. Wenn das poröse Material in einer Hülse aufgenommen ist, besteht hier die Möglichkeit, die Öffnung am Austritt des Einzelfadens, der Einzelfaser oder des Einzelrovings aus der Hülse mit einem entsprechenden Durchmesser zu gestalten, so dass das überschüssige Matrixmaterial schon innerhalb der Hülse abgestreift wird und in das poröse Material zurückgeführt werden kann. Alternativ ist es jedoch auch möglich, in Laufrichtung der Einzelfaser, des Einzelfadens oder des Einzelrovings hinter der Hülse eine separate Düse oder Lochblende vorzusehen. Insbesondere, wenn unterschiedliche Faservolumengehalte eingestellt werden sollen, kann es vorteilhaft sein, eine einstellbare Lochblende einzusetzen, da diese dann auf den jeweils gewünschten Faservolumengehalt eingestellt werden kann.

Die weitere Aufgabe wird gelöst durch ein Verfahren zur Herstellung von Bauteilen aus imprägnierten Einzelfasern, Einzelfäden oder Einzelrovings, umfassend:
(a) Imprägnieren einer Einzelfaser, eines Einzelfadens oder eines Einzelrovings in einer wie vorstehend beschriebenen Vorrichtung mit einem Matrixmaterial, wobei dem porösen Material, gegen dessen Stirnfläche die Einzelfaser, der Einzelfaden oder das Einzelroving gedrückt wird, nur so viel Matrixmaterial zugeführt wird, dass das poröse Material nicht übersättigt wird.
(b) Legen der getränkten Einzelfasern, Einzelfäden oder Einzelrovings auf die Oberfläche eines Formwerkzeugs zur Formung des Bauteils und
(c) Aushärten oder Erstarren des Matrixmaterials und Entnehmen des Bauteils.

Das Formwerkzeug, das zur Herstellung des Bauteils verwendet wird, kann jedes beliebige Formwerkzeug sein, das sich zur Produktion von Formteilen aus faserverstärkten Polymeren eignet. Abhängig von der Form des herzustellenden Bauteils kann das Formwerkzeug einteilig oder mehrteilig ausgeführt werden und ein offenes Formwerkzeug oder auch ein zu schließendes Formwerkzeug sein. Ein zu schließendes Formwerkzeug wird immer dann eingesetzt, wenn die imprägnierten und auf die Oberfläche des Formwerkzeugs gelegten Einzelfasern, Einzelfäden oder Einzelrovings in eine bestimmte Form gepresst werden müssen. Offene Formwerkzeuge sind insbesondere solche, auf die die imprägnierten Einzelfasern, Einzelfäden oder Einzelrovings zur Herstellung des Formteils gewickelt werden können oder auch solche, bei denen die imprägnierten Einzelfasern, Einzelfäden oder Einzelrovings auf eine konvexe Oberfläche gelegt werden können, so dass die imprägnierten Einzelfasern, Einzelfäden oder Einzelrovings auch bei einer möglichen Spannung beim Legen vollständig auf der Oberfläche aufliegen und die Form des Formwerkzeugs annehmen.

In einer besonders bevorzugten Ausführungsform ist das Formwerkzeug ein Wickeldorn, auf den die Einzelfaser, der Einzelfaden oder das Einzelroving zur Herstellung eines Hohlkörpers gewickelt wird.

Ein solcher Hohlkörper kann zum Beispiel ein Mast sein, wie er für eine Windkraftanlage oder auch auf einem Segelschiff oder Segelboot eingesetzt wird. Weitere Hohlkörper, die durch das Wickeln auf einen Wickeldorn hergestellt werden können, sind beispielsweise Rahen für Segelschiffe, Rohre oder beliebige sonstige Endlosprofile, die keine konkaven Bereiche oder Rücksprünge aufweisen, da es nicht möglich ist, die imprägnierte Einzelfaser, den imprägnierten Einzelfaden oder das imprägnierte Einzelroving beim Wickeln in einen solchen Rücksprung oder konkaven Bereich zu drücken.

Zur Herstellung des Bauteils ist es möglich, jeweils nur eine Einzelfaser, einen Einzelfaden oder ein Einzelroving zu imprägnieren und auf die Oberfläche des Formwerkzeugs zu legen. Insbesondere bei großen herzustellenden Bauteilen ist es jedoch vorteilhaft, nicht nur eine Einzelfaser, einen Einzelfaden oder ein Einzelroving zu verarbeiten sondern gleichzeitig mehrere Einzelfasern, Einzelfäden oder Einzelrovings. Durch die gleichzeitige Verarbeitung mehrerer Einzelfasern, Einzelfäden oder Einzelrovings kann die Zeit, die benötigt wird, um die Einzelfasern, Einzelfäden oder Einzelrovings auf die Oberfläche des Formwerkzeugs zu legen reduziert werden. Wenn mehrere Einzelfasern, Einzelfäden oder Einzelrovings gleichzeitig verarbeitet werden, wird jede der Einzelfasern, Einzelfäden oder Einzelrovings in einer Vorrichtung, wie sie vorstehend beschrieben ist, imprägniert und anschließend werden die so imprägnierten Einzelfasern, Einzelfäden oder Einzelrovings auf die Oberfläche des Formwerkzeugs zur Formung des Bauteils gelegt.

Nach dem Legen der imprägnierten Einzelfasern, Einzelfäden oder Einzelrovings auf die Oberfläche des Formwerkzeugs erfolgt dann ein Aushärten oder Erstarren des Matrixmaterials zur Fertigstellung des Bauteils. Ein Aushärten erfolgt dabei üblicherweise dann, wenn das Matrixmaterial noch chemisch reagiert, zum Beispiel bei Mehrkomponentensystemen wie sie insbesondere zur Herstellung von Duroplasten eingesetzt werden, oder auch bei Einkomponentensystemen, bei denen die Einzelfaser, der Einzelfaden oder das Einzelroving mit einem Monomer oder Oligomer imprägniert wird, das nach dem Imprägnieren zum Polymer reagiert. Abhängig von dem herzustellenden Polymer und den davon abhängigen Ausgangsstoffen kann die Reaktion zum Beispiel durch Zugabe von Initiatoren oder Aktivatoren gestartet werden und/oder auch durch Energiezufuhr, beispielsweise durch Wärme, Licht oder UV-Strahlung.

Wenn das Matrixmaterial eine Kunststoffschmelze ist, in der Regel ein Thermoplast, erfolgt keine weitere chemische Reaktion sondern der Kunststoff erstarrt durch Abkühlung, wodurch das fertig geformte Bauteil entsteht.

Besonders bevorzugt wird das erfindungsgemäße Verfahren jedoch eingesetzt bei Systemen, bei denen das Matrixmaterial erst nach dem Imprägnieren zum Polymer reagiert.

Ausführungsbeispiele der Erfindung sind in den Figuren dargestellt und werden in der nachfolgenden Beschreibung näher erläutert.

Es zeigen:
- Figur 1: eine Vorrichtung zur Imprägnierung von Einzelfasern, Einzelfäden oder Einzelrovings in einer ersten Ausführungsform,
- Figur 2: eine Vorrichtung zur Imprägnierung von Einzelfasern, Einzelfäden oder Einzelrovings mit einer Auflage, auf der die zu imprägnierende Einzelfaser, der zu imprägnierende Einzelfaden oder das zu imprägnierende Einzelroving geführt werden,
- Figur 3: eine Vorrichtung zur Imprägnierung von Einzelfasern, Einzelfäden oder Einzelrovings, bei der die Auflage, auf der die zu imprägnierende Einzelfaser, der zu imprägnierende Einzelfaden oder das zu imprägnierende Einzelroving geführt werden, eine Auflagefläche eines zweiten porösen Materials ist,
- Figur 4: eine Vorrichtung zur Imprägnierung von Einzelfasern, Einzelfäden oder Einzelrovings, bei der das poröse Material in einer Hülse aufgenommen ist in geöffnetem Zustand,
- Figur 5: die in Figur 4 dargestellte Vorrichtung in geschlossenem Zustand,
- Figur 6: eine dreidimensionale Darstellung einer Vorrichtung zur Imprägnierung von Einzelfasern, Einzelfäden oder Einzelrovings, bei der das poröse Material in einer Hülse aufgenommen ist, durch die die zu imprägnierende Einzelfaser, der zu imprägnierende Einzelfaden oder das zu imprägnierende Einzelroving geführt werden,
- Figur 7: die in Figur 6 dargestellte Vorrichtung in geöffnetem Zustand.

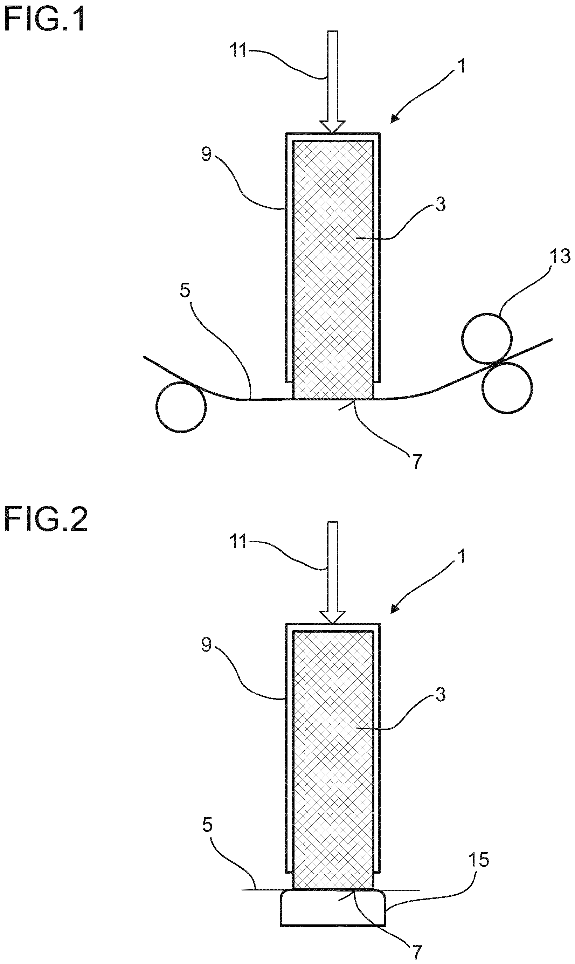

In Figur 1 ist eine Vorrichtung zur Imprägnierung von Einzelfasern, Einzelfäden oder Einzelrovings in einer ersten Ausführungsform dargestellt.

Eine Vorrichtung 1 zur Imprägnierung von Einzelfasern, Einzelfäden oder Einzelrovings umfasst ein poröses Material 3, das mit einem Matrixmaterial getränkt ist. Zur Imprägnierung wird eine Einzelfaser 5, ein Einzelfaden oder ein Einzelroving gegen eine Stirnfläche 7 des porösen Materials gedrückt. Durch den Druck der Einzelfaser 5, des Einzelfadens oder des Einzelrovings auf die Stirnfläche 7 wird Matrixmaterial aus dem porösen Material 3 auf die Einzelfaser 5, der Einzelfaden oder das Einzelroving übertragen, so dass die Einzelfaser 5, der Einzelfaden oder das Einzelroving mit dem Matrixmaterial imprägniert wird.

Zur besseren Handhabbarkeit wird das poröse Material 3 vorzugsweise wie hier schematisch dargestellt in einer Halterung 9 aufgenommen. Die Halterung 9 kann aus jedem beliebigen Material gefertigt sein, vorzugsweise aus einem Metall.

Insbesondere zur Imprägnierung in einem kontinuierlichen Verfahren ist es notwendig, dem porösen Material 3 regelmäßig oder kontinuierlich Matrixmaterial zuzuführen. Bei einer regelmäßigen Zugabe ist es zum Beispiel möglich, den Gehalt an Matrixmaterial im porösen Material zu messen und bei Unterschreiten einer vorgegebenen Grenze Matrixmaterial nachzuführen. Der Gehalt an Matrixmaterial kann zum Beispiel durch Messung der Masse des porösen Materials erfolgen. Bei einer kontinuierlichen Zugabe an Matrixmaterial wird vorzugsweise eine Dosierpumpe eingesetzt, mit der Matrixmaterial in der gleichen Menge zugeführt wird, wie an die zu imprägnierende Einzelfaser, den zu imprägnierenden Einzelfaden oder das zu imprägnierende Einzelroving abgegeben wird, so dass der Anteil an Matrixmaterial im porösen Material konstant bleibt. Die Zugabe des Matrixmaterials in das poröse Material ist hier schematisch mit einem Pfeil 11 dargestellt. Alternativ ist es auch möglich, einen Pufferbehälter mit einer vorgegebenen Füllmenge vorzusehen, der oberhalb des porösen Materials angeordnet ist. Über eine Verbindungsleitung aus dem Vorratsbehälter zum porösen Material kann dann Matrixmaterial durch Schwerkrafteinwirkung nachgeführt werden. Die vorgegebene Füllmenge im Pufferbehälter erlaubt eine Einstellung des hydrostatischen Drucks, so dass auch hierdurch gewährleistet wird, dass immer ausreichend Matrixmaterial im porösen Material erhalten ist.

Um die zu imprägnierende Einzelfaser, den zu imprägnierenden Einzelfaden oder das zu imprägnierende Einzelroving gegen das poröse Material zu drücken, können unterschiedliche Methoden eingesetzt werden. In den Figuren 1, 2 und 3 sind dabei 3 verschiedene Varianten dargestellt, mit denen die Einzelfaser, der Einzelfaden oder das Einzelroving gegen das poröse Material gedrückt werden kann.

So ist es zum Beispiel, wie in Figur 1 dargestellt, möglich, Spannrollen 13 vorzusehen, um die zu imprägnierende Einzelfaser 5, den zu imprägnierenden Einzelfaden oder das Einzelroving gegen die Stirnfläche 7 des porösen Materials 3 zu drücken. Hierzu werden die Spannrollen so angeordnet, dass die zu imprägnierende Einzelfaser 5, der zu imprägnierende Einzelfaden oder das zu imprägnierende Einzelroving gegen die Stirnfläche 7 des porösen Materials 3 gedrückt wird. Der notwendige Druck kann dadurch erzielt werden, dass jeweils Rollenpaare als Spannrollen 13 eingesetzt werden, wobei die Einzelfaser 5, der Einzelfaden oder das Einzelroving zwischen den Rollenpaaren hindurchgeführt wird. Durch unterschiedliche Drehgeschwindigkeit der Rollenpaare kann dann eine Spannung auf die Einzelfaser 5, der Einzelfaden oder das Einzelroving aufgebracht werden, so dass dieses gegen die Stirnfläche 7 des porösen Materials gedrückt wird.

Eine alternative Ausführungsform für die Einrichtung zum Drücken der Einzelfaser 5, des Einzelfadens oder des Einzelrovings gegen die Stirnfläche 7 des porösen Materials 3 ist in Figur 2 dargestellt. Hier umfasst die Einrichtung, mit der die zu imprägnierende Einzelfaser 5, der zu imprägnierende Einzelfaden oder das zu imprägnierende Einzelroving gegen die Stirnfläche 7 des porösen Materials 3 gedrückt wird, eine Auflage 15, auf der die Einzelfaser 5, der Einzelfaden oder das Einzelroving geführt werden. Mit der Auflage 15 wird die Einzelfaser 5, der Einzelfaden oder das Einzelroving gegen die Stirnfläche 7 des porösen Materials 3 gedrückt. Als Material für die Auflage 15 kann jedes beliebige, dem Fachmann bekannte inkompressible Material eingesetzt werden. Bevorzugt ist es, wenn das Material eine glatte Oberfläche aufweist, so dass kein Matrixmaterial in das Material der Auflage 15 eindringen kann. Geeignete Materialien sind daher insbesondere Metalle oder Glas.

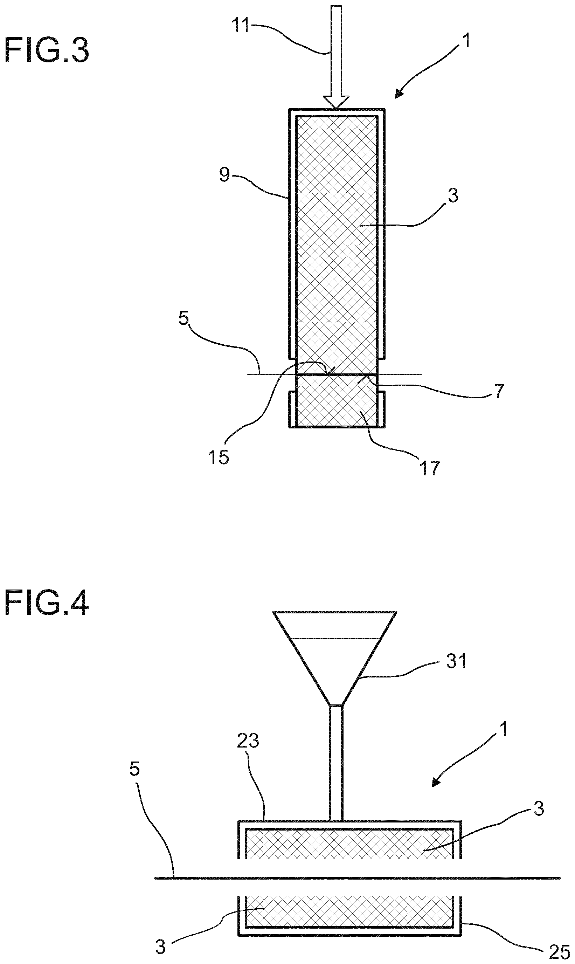

Eine weitere Alternative ist in Figur 3 dargestellt. Hier wird als Auflage 15 ein zweites poröses Material 17 eingesetzt. Das zweite poröse Material 17 wird dabei vorzugsweise ebenfalls mit dem Matrixmaterial getränkt, so dass die Einzelfaser 5, der Einzelfaden oder das Einzelroving Matrixmaterial vom ersten porösen Material 3 und vom zweiten porösen Material 17 aufnehmen kann. Es ist jedoch auch möglich, das zweite poröse Material 17 nicht mit dem Matrixmaterial zu tränken. In diesem Fall kann das zweite poröse Material 17 überschüssiges Matrixmaterial, das vom ersten porösen Material 3 abgegeben wurde aber nicht von der Einzelfaser 5, dem Einzelfaden oder dem Einzelroving aufgenommen wurde, aufnehmen, so dass dieses nicht abtropft und zu Verunreinigungen führt. Sobald das zweite poröse Material mit dem aufgenommenen überschüssigen Matrixmaterial gesättigt ist, ist es zum Beispiel möglich, das zweite poröse Material 17 auszupressen, um das Matrixmaterial zurückzugewinnen. Alternativ ist es auch möglich, das zweite poröse Material 17 dann als mit dem Matrixmaterial gesättigtes poröses Material 3 zu nutzen, um die Einzelfaser 5, den Einzelfaden oder das Einzelroving zu imprägnieren und ein neues poröses Material als zweites poröses Material 17 vorzusehen, mit dem die Einzelfaser 5, der Einzelfaden oder das Einzelroving gegen die Stirnfläche 7 des porösen Materials 3 gedrückt wird.

Alternativ ist es jedoch auch möglich, den gesamten Aufbau zu drehen, so dass die Stirnfläche 7 des porösen Materials 3 in jede beliebige andere Richtung weisen kann. Hierbei ist jeweils darauf zu achten, dass neben dem porösen Material 3 auch die Einrichtung, mit der die Einzelfaser 5, der Einzelfaden oder das Einzelroving gegen die Stirnfläche gedrückt wird, entsprechend ausgerichtet wird, dass die Einzelfaser 5, der Einzelfaden oder das Einzelroving gegen die Stirnfläche 7 des porösen Materials 3 gedrückt werden können.

Eine alternative Ausführungsform für die Vorrichtung zu Imprägnierung von Einzelfasern, Einzelfäden oder Einzelrovings ist in den Figuren 4 bis 7 dargestellt.

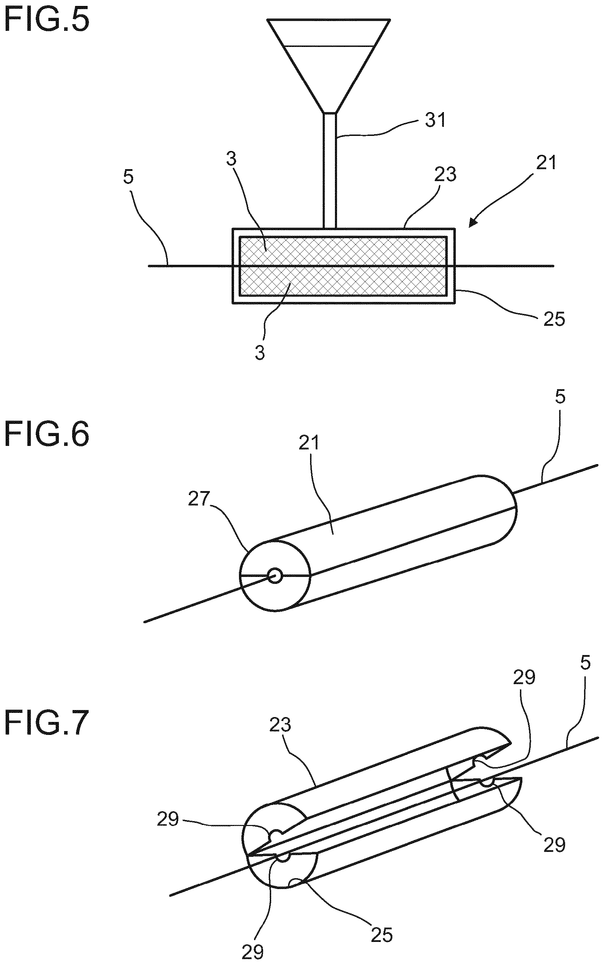

Hier zeigen die Figuren 5 und 6 die Vorrichtung zur Imprägnierung einer Einzelfaser 5, eines Einzelfadens oder eines Einzelrovings in geschlossenem Zustand und die Figuren 4 und 7 die Vorrichtung in geöffnetem Zustand.

In der in den Figuren 4 und 5 dargestellten Ausführungsform ist das poröse Material 3 in einer Hülse 7 aufgenommen. Zur Imprägnierung wird die Einzelfaser 5, der Einzelfaden oder das Einzelroving durch das mit dem Matrixmaterial getränkte poröse Material in der Hülse 21 hindurchgeführt.

Um die Einzelfaser 5, den Einzelfaden oder das Einzelroving in die Hülse einlegen zu können, ist es vorteilhaft, die Hülse 21 zweiteilig mit einem Oberteil 23 und einem Unterteil 25 auszuführen. Hierbei ist jeweils im Oberteil 23 und im Unterteil 25 poröses Material 3 aufgenommen. zum Einlegen der Einzelfaser 5, des Einzelfadens oder des Einzelrovings werden das Oberteil 23 und das Unterteil 25 geöffnet, die Einzelfaser 5, den Einzelfaden oder das Einzelroving wird auf das poröse Material 3 des Unterteils 25 aufgelegt und anschließend wird das Oberteil 23 mit dem Unterteil 25 verbunden und die Hülse 21 wird so geschlossen.

Die Zufuhr des Matrixmaterials erfolgt über eine Dosiereinrichtung 31, wobei hier, wie in den Figuren 4 und 5 dargestellt ein Zulauf über einen Einfüllstutzen genutzt werden kann. Alternativ ist es jedoch auch möglich, wie vorstehend bereits für die Ausführungsform der Figuren 1 bis 3 beschrieben, eine Dosierpumpe oder vergleichbare Dosiereinheit zur Zufuhr des Matrixmaterials zu verwenden.

In den Figuren 6 und 7 ist ein zweiteiliger Aufbau mit einer Hülse 21 dreidimensional dargestellt. Figur 6 zeigt den Aufbau in geschlossenem und Figur 7 in geöffnetem Zustand.

Um die Einzelfaser 5, den Einzelfaden oder das Einzelroving durch die Hülse zu führen, ist an den Stirnseiten der Hülse 21 eine Durchführung 27 ausgebildet, durch die die Einzelfaser 5, der Einzelfaden oder das Einzelroving geführt wird. Bei einem zweiteiligen Aufbau der Hülse 21, wie er hier dargestellt ist, ist dazu vorzugsweise jeweils im Oberteil 23 und im Unterteil 25 eine Ausnehmung 29 ausgebildet, die bei geschlossener Hülse 21 die Durchführung 27 bildet.

Das Oberteil 23 und das Unterteil 25 können, wie in Figur 5 dargestellt voneinander getrennte Teile sein oder alternativ, wie in Figur 7 dargestellt miteinander an einer Seite über ein Scharnier 27 verbunden, so dass die Hülse 21 zum Öffnen aufgeklappt wird.

Um das Oberteil 23 und das Unterteil 25 miteinander zu verbinden, kann jede beliebige, dem Fachmann bekannte Schließeinrichtung verwendet werden. So können das Oberteil 23 und das Unterteil 25 zum Beispiel mit Haken oder auch mit Schließbügeln oder einem Spannverschluss mit Spannbügel miteinander verbunden werden. Alternativ ist es auch möglich, Oberteil und Unterteil miteinander zu verschrauben. Bevorzugt ist jedoch eine Schließeinrichtung, die sich schnell öffnen lässt, wie dies bei Haken oder Schließbügeln, beziehungsweise einem Spannverschluss mit Spannbügel der Fall ist.

Bei einer zweigeteilten Form ist es notwendig, das Oberteil 23 und das Unterteil 25 an zwei Seiten miteinander zu verbinden. Demgegenüber ist es bei der Ausführungsform mit Scharnier ausreichend auf der dem Scharnier gegenüberliegenden Seite eine Schließvorrichtung vorzusehen.

## Patentansprüche

1. Vorrichtung zur Imprägnierung von Einzelfasern (5), Einzelfäden oder Einzelrovings mit einem Matrixmaterial, umfassend ein mit dem Matrixmaterial getränktes poröses Material (3) sowie eine Dosiereinrichtung, um Matrixmaterial in das poröse Material (3) einzudosieren, **dadurch gekennzeichnet, dass** eine Einrichtung umfasst ist, mit der die zu imprägnierende Einzelfaser (5), der zu imprägnierende Einzelfaden oder das zu imprägnierende Einzelroving gegen eine Stirnfläche (7) des porösen Materials (3) gedrückt werden kann, oder dass das poröse Material (3) in einer Hülse (21) aufgenommen ist und die Einzelfaser (5), der Einzelfaden oder das Einzelroving durch das poröse Material (3) in der Hülse (21) geführt werden kann, wobei das poröse Material ein offenzelliger Schaum mit einer Zellgröße mit einem mittleren Durchmesser im Bereich von 70 bis 250 µm ist und wobei die Vorrichtung so eingerichtet ist, dass das poröse Material nicht mit dem Matrixmaterial übersättigt wird.

2. Vorrichtung gemäß Anspruch 1, **dadurch gekennzeichnet, dass** das poröse Material (3) gegenüber dem Matrixmaterial inert ist.

3. Vorrichtung gemäß Anspruch 1 oder 2, **dadurch gekennzeichnet, dass** das poröse Material (3) ein offenzelliger Schaum ist, der im Wesentlichen aus Zellstegen besteht.

4. Vorrichtung gemäß einem der Ansprüche 1 bis 3, **dadurch gekennzeichnet, dass** das poröse Material aus einem Werkstoff hergestellt wird, der ausgewählt ist aus Polyolefinen, Polyurethanen oder Melaminharz.

5. Vorrichtung gemäß einem der Ansprüche 1 bis 4, **dadurch gekennzeichnet, dass** die Einrichtung, mit der die zu imprägnierende Einzelfaser (5), der zu imprägnierende Einzelfaden oder das zu imprägnierende Einzelroving gegen das poröse Material gedrückt werden kann mindestens zwei Spannrollen (13) umfasst, über die die Einzelfaser (5), der Einzelfaden oder das Einzelroving geführt wird.

6. Vorrichtung gemäß einem der Ansprüche 1 bis 5, **dadurch gekennzeichnet, dass** die Einrichtung, mit der die zu imprägnierende Einzelfaser (5), der zu imprägnierende Einzelfaden oder das zu imprägnierende Einzelroving gegen das poröse Material (3) gedrückt werden kann, eine Auflage (15) umfasst, auf der die Einzelfaser (5), der Einzelfaden oder das Einzelroving geführt werden.

7. Vorrichtung gemäß einem der Ansprüche 1 bis 6, **dadurch gekennzeichnet, dass** das poröse Material (3), gegen das die Einzelfaser (5), der Einzelfaden oder das Einzelroving gedrückt werden, eine Stirnfläche (7) aufweist, wobei die Stirnfläche eine maximale Breite im Bereich des 1,5- bis 5-fachen des Durchmessers der zu tränkenden Einzelfaser, des zu tränkenden Einzelfadens oder des zu tränkenden Einzelrovings aufweist und eine maximale Länge im Bereich des 2- bis 10-fachen des Durchmessers der zu tränkenden Einzelfaser, des zu tränkenden Einzelfadens oder des zu tränkenden Einzelrovings.

8. Vorrichtung gemäß Anspruch 6 oder 7, **dadurch gekennzeichnet, dass** die Auflage (15), auf der die Einzelfaser (5), der Einzelfaden oder das Einzelroving geführt werden, eine Stirnfläche eines zweiten porösen Materials (17) ist, das mit Matrixmaterial getränkt ist.

9. Vorrichtung gemäß einem der Ansprüche 1 bis 4, **dadurch gekennzeichnet, dass** die Hülse (21), in der das poröse Material aufgenommen ist, zweiteilig ausgeführt ist und zum Einlegen der Einzelfaser (5), des Einzelfadens oder des Einzelrovings geöffnet werden kann, wobei jeder Teil der Hülse poröses Material enthält.

10. Vorrichtung gemäß Anspruch 9, **dadurch gekennzeichnet, dass** zusätzlich eine Düse oder Lochplatte umfasst ist, um einen gewünschten Faservolumengehalt einzustellen.

11. Verfahren zur Herstellung von Bauteilen aus imprägnierten Einzelfasern (5), Einzelfäden oder Einzelrovings, umfassend:
(a) Imprägnieren einer Einzelfaser (5), eines Einzelfadens oder eines Einzelrovings in einer Vorrichtung (1) gemäß einem der Ansprüche 1 bis 10 mit einem Matrixmaterial, wobei dem porösen Material (3), gegen dessen Stirnfläche die Einzelfaser (5), der Einzelfaden oder das Einzelroving gedrückt wird, nur so viel Matrixmaterial zugeführt wird, dass das poröse Material (3) nicht übersättigt wird.
(b) Legen der getränkten Einzelfasern, Einzelfäden oder Einzelrovings auf die Oberfläche eines Formwerkzeugs zur Formung des Bauteils und
(c) Aushärten oder Erstarren des Matrixmaterials und Entnehmen des Bauteils.

12. Verfahren gemäß Anspruch 11, **dadurch gekennzeichnet, dass** das Formwerkzeug ein Wickeldorn ist, auf den die Einzelfaser (5), der Einzelfaden oder das Einzelroving zur Herstellung eines Hohlkörpers gewickelt wird.

13. Verfahren gemäß Anspruch 11 oder 12, **dadurch gekennzeichnet, dass** zur Herstellung des Bauteils gleichzeitig mehrere Einzelfasern (5), Einzelfäden oder Einzelrovings, die jeweils in einer Vorrichtung gemäß einem der Ansprüche 1 bis 8 imprägniert wurden auf die Oberfläche des Formwerkzeugs zur Formung des Bauteils gelegt werden.

## Claims

1. A device for impregnating individual fibers (5), individual threads, or individual rovings with a matrix material, comprising a porous material (3) that is soaked with the matrix material, and a metering installation for metering matrix material into the porous material (3), wherein an installation by way of which the individual fiber (5) to be impregnated, the individual thread to be impregnated, or the individual roving to be impregnated can be pressed against an end face (7) of the porous material (3) is comprised, or wherein the porous material (3) is received in a sleeve (21) and the individual fiber (5), the individual thread, or the individual roving can be guided through the porous material (3) in the sleeve (21), where the porous material is an open-cell foam having a cell size of a mean diameter in the range from 70 to 250 µm, and where the device is specified such that the porous material is not oversaturated with the matrix material.

2. The device according to claim 1, wherein the porous material (3) is inert in relation to the matrix material.

3. The device according to claim 1 or 2, wherein the porous material (3) is an open-cell foam which is composed substantially of cell webs.

4. The device according to one of claims 1 to 3, wherein the porous material is produced from a material selected from polyolefins, polyurethanes, or melamine resin.

5. The device according to one of claims 1 to 4, wherein the installation by way of which the individual fiber (5) to be impregnated, the individual thread to be impregnated, or the individual roving to be impregnated, can be pressed against the porous material comprises at least two tension rollers (13) over which the individual fiber (5), the individual thread, or the individual roving is guided.

6. The device according to one of claims 1 to 5, wherein the installation by way of which the individual fiber (5) to be impregnated, the individual thread to be impregnated, or the individual roving to be impregnated, can be pressed against the porous material (3) comprises a bearing face (15) on which the individual fiber (5), the individual thread, or the individual roving is guided.

7. The device according to one of claims 1 to 6, wherein the porous material (3) against which the individual fiber (5), the individual thread, or the individual roving is pressed has an end face (7), where the end face has a maximum width in the range of 1.5 to 5 times the diameter of the individual fiber to be soaked, of the individual thread to be soaked, or of the individual roving to be soaked, and has a maximum length in the range of 2 to 10 times the diameter of the individual fiber to be soaked, of the individual thread to be soaked, or of the individual roving to be soaked.

8. The device according to claim 6 or 7, wherein the bearing face (15) on which the individual fiber (5), the individual thread, or the individual roving is guided is an end face of a second porous material (17) which is soaked with matrix material.

9. The device according to one of claims 1 to 4, wherein the sleeve (21) in which the porous material is received is embodied in two parts and can be opened for placing the individual fiber (5), the individual thread, or the individual roving, where each part of the sleeve contains porous material.

10. The device according to claim 9, wherein a nozzle or a perforated plate for setting a desired fiber volume content is additionally comprised.

11. A method for producing components from impregnated individual fibers (5), individual threads, or individual rovings, comprising the following steps:
a) impregnating an individual fiber (5), an individual thread, or an individual roving in a device (1) according to one of claims 1 to 10 with a matrix material, where the porous material (3) against the end face of which the individual fiber (5), the individual thread, or the individual roving is pressed is fed only so much matrix material that the porous material (3) is not oversaturated;
b) laying the soaked individual fibers, individual threads, or individual rovings on the surface of a moulding tool for moulding the component; and
c) curing or solidifying the matrix material and removing the component.

12. The method according to claim 11, wherein the moulding tool is a winding mandrel onto which the individual fiber (5), the individual thread, or the individual roving is wound for producing a hollow body.

13. The method according to claim 11 or 12, wherein for producing the component a plurality of individual fibers (5), individual threads, or individual rovings which have in each case been impregnated in a device according to one of claims 1 to 8, are simultaneously laid onto the surface of the moulding tool in order for the component to be formed.

## Revendications

1. Dispositif pour l'imprégnation de fibres individuelles (5), de fils individuels ou de stratifils individuels par un matériau de matrice, comprenant un matériau poreux (3) imbibé ainsi qu'un dispositif de dosage pour doser le matériau de matrice dans le matériau poreux (3), **caractérisé en ce qu'**un équipement est compris, qui permet de comprimer la fibre individuelle (5) à imprégner, le fil individuel à imprégner ou le stratifil individuel à imprégner contre une face avant (7) du matériau poreux (3) ou **en ce que** le matériau poreux (3) est logé dans une gaine (21) et la fibre individuelle (5), le fil individuel ou le stratifil individuel peut être guidé à travers le matériau poreux (3) dans la gaine (21), le matériau poreux étant une mousse à alvéoles ouvertes présentant une dimension d'alvéole d'un diamètre moyen situé dans la plage de 70 à 250 µm et le dispositif étant conçu de manière telle que le matériau poreux n'est pas sursaturé en matériau de matrice.

2. Dispositif selon la revendication 1, **caractérisé en ce que** le matériau poreux (3) est inerte par rapport au matériau de matrice.

3. Dispositif selon la revendication 1 ou 2, **caractérisé en ce que** le matériau poreux (3) est une mousse à alvéoles ouvertes qui est principalement constituée par des âmes alvéolaires.

4. Dispositif selon l'une quelconque des revendications 1 à 3, **caractérisé en ce que** le matériau poreux est fabriqué à partir d'un matériau qui est choisi parmi les polyoléfines, les polyuréthanes ou la résine de mélamine.

5. Dispositif selon l'une quelconque des revendications 1 à 4, **caractérisé en ce que** l'équipement permettant de comprimer la fibre individuelle (5) à imprégner, le fil individuel à imprégner ou le stratifil individuel à imprégner contre le matériau poreux (3) comprend au moins deux rouleaux de tension (13), sur lesquels la fibre individuelle (5), le fil individuel ou le stratifil individuel est guidé(e).

6. Dispositif selon l'une quelconque des revendications 1 à 5, **caractérisé en ce que** l'équipement permettant de comprimer la fibre individuelle (5) à imprégner, le fil individuel à imprégner ou le stratifil individuel à imprégner contre le matériau poreux (3) comprend un support (15) sur lequel la fibre individuelle (5), le fil individuel ou le stratifil individuel sont guidés.

7. Dispositif selon l'une quelconque des revendications 1 à 6, **caractérisé en ce que** le matériau poreux (3), contre lequel la fibre individuelle (5), le fil individuel ou le stratifil individuel sont comprimés, présente une face avant (7), la face avant présentant une largeur maximale située dans la plage représentant 1,5 à 5 fois le diamètre de la fibre individuelle à imbiber, du fil individuel à imbiber ou du stratifil individuel à imbiber et une longueur maximale située dans une plage représentant 2 à 10 fois le diamètre de la fibre individuelle à imbiber, du fil individuel à imbiber ou du stratifil individuel à imbiber.

8. Dispositif selon la revendication 6 ou 7, **caractérisé en ce que** le support (15), sur lequel la fibre individuelle (5), le fil individuel ou le stratifil individuel sont guidés est une face avant d'un deuxième matériau poreux (17) qui est imbibé de matériau de matrice.

9. Dispositif selon l'une quelconque des revendications 1 à 4, **caractérisé en ce que** la gaine (21), dans laquelle le matériau poreux est logé, est réalisée en deux parties et peut être ouverte pour l'insertion de la fibre individuelle (5), du fil individuel ou du stratifil individuel, chaque partie de la gaine contenant du matériau poreux.

10. Dispositif selon la revendication 9, **caractérisé en ce qu'**en outre une buse ou une plaque perforée est comprise, pour régler la teneur volumique en fibres souhaitée.

11. Procédé pour la fabrication de composants en fibres individuelles (5), en fils individuels ou en stratifils individuels imprégné(e)s, comprenant :
(a) l'imprégnation d'une fibre individuelle (5), d'un fil individuel ou d'un stratifil individuel dans un dispositif (1) selon l'une quelconque des revendications 1 à 10 par un matériau de matrice, le matériau poreux (3), contre la surface avant duquel la fibre individuelle (5), le fil individuel ou le stratifil individuel est comprimé, n'étant alimenté qu'en une quantité de matériau de matrice telle que le matériau poreux (3) n'est pas sursaturé,
(b) dépôt des fibres individuelles, des fils individuels ou des stratifils individuels imbibé(e)s sur la surface d'un outil de façonnage pour la formation de l'élément et
(c) durcissement ou solidification du matériau de matrice et prélèvement du composant.

12. Procédé selon la revendication 11, **caractérisé en ce que** l'outil de façonnage est un mandrin de bobinage sur lequel la fibre individuelle (5), le fil individuel ou le stratifil individuel est bobiné(e) pour fabriquer un corps creux.

13. Procédé selon la revendication 11 ou 12, **caractérisé en ce que**, pour la fabrication du composant, plusieurs fibres individuelles (5), plusieurs fils individuels ou plusieurs stratifils individuels, qui ont été imprégné(e)s respectivement dans un dispositif selon l'une quelconque des revendications 1 à 8, sont déposé(e)s simultanément sur la surface de l'outil de façonnage pour la formation du composant.
